# FASCICULE DE BREVET EUROPEEN

(11) **EP 2 126 322 B1**
(45) Date de publication et mention de la délivrance du brevet: **19.01.2011**
(21) Numéro de dépôt: 08761830.2
(22) Date de dépôt: 01.02.2008
(51) Int. Cl.: F02K 1/76

(54) **PROCÉDÉ D'AUTOCALIBRATION POUR VÉRINS ÉLECTRIQUES DE NACELLE DE TURBORÉACTEUR**
SELBSTKALIBRIERUNGSVERFAHREN FÜR DIE ELEKTRISCHEN BUCHSEN EINER TURBOSTRAHL-GONDEL
SELF-CALIBRATION METHOD FOR THE ELECTRIC JACKS OF A TURBOJET NACELLE

(30) Priorité: 28.02.2007 FR 0701417
(43) Date de publication de la demande: 02.12.2009
(73) Titulaire: Aircelle, 76700 Gonfreville l'Orcher (FR)
(72) Inventeur: MARIN-MARTINOD, Thierry, F-95690 Nesles-la-Vallée (FR); MAALIOUNE, Hakim, F-78630 Orgeval (FR)
(74) Mandataire: Gaillarde, Frédéric F. Ch.
(86) Numéro de dépôt international: PCT/FR2008/000125
(87) Numéro de publication internationale: WO 2008/113900

(56) Documents cités:
- WO-A-00/05497
- WO-A-03/010430
- FR-A1- 2 872 222
- US-A1- 2003 159 429

## Description

La présente invention se rapporte à un procédé d'autocalibration de vérins électriques équipant un inverseur de poussée de turboréacteur.

Le rôle d'un inverseur de poussée lors de l'atterrissage d'un avion est d'améliorer la capacité de freinage d'un avion en redirigeant vers l'avant au moins une partie de la poussée générée par le turboréacteur. Dans cette phase, l'inverseur obstrue la tuyère d'éjection des gaz et dirige le flux d'éjection du moteur vers l'avant de la nacelle, générant de ce fait une contre-poussée qui vient s'ajouter au freinage des roues de l'avion.

Les moyens mis en oeuvre pour réaliser cette réorientation du flux varient suivant le type d'inverseur. Cependant, dans tous les cas, la structure d'un inverseur comprend des capots mobiles déplaçables entre, d'une part, une position déployée dans laquelle ils ouvrent dans la nacelle un passage destiné au flux dévié, et d'autre part, une position d'escamotage dans laquelle ils ferment ce passage. Ces capots mobiles peuvent en outre remplir une fonction de déviation ou simplement d'activation d'autres moyens de déviation.

Dans les inverseurs à grilles, par exemple, les capots mobiles coulissent le long de rails de manière à ce qu'en reculant lors de la phase d'ouverture, ils découvrent des grilles d'aubes de déviation disposées dans l'épaisseur de la nacelle. Un système de bielles relie ce capot mobile à des portes de blocage qui se déploient à l'intérieur du canal d'éjection et bloquent la sortie en flux direct. Dans les inverseurs à portes, en revanche, chaque capot mobile pivote de manière à venir bloquer le flux et le dévier et est donc actif dans cette réorientation.

Récemment, les vérins hydrauliques ou pneumatiques actionnant classiquement ces capots mobiles ont commencé à être remplacés par des vérins électriques de manière à éviter la mise en place d'un système d'alimentation en fluide sous pression qui demandait une maintenance importante et à permettre un pilotage amélioré de l'ouverture et de la fermeture desdits capots mobiles.

Les demandes de brevets EP 0 843 089, FR 2 872 222 et FR 2 872 223, entre autres, traitent de ces systèmes d'actionnement électriques.

Un problème existe lors de l'installation de ces actionneurs électriques. En effet, lors de leur installation, les vérins électriques doivent être calés et leur position calibrée en tenant compte de dispersions mécaniques de la nacelle ainsi que des jeux et écarts d'assemblage. Cette procédure est longue et fastidieuse et doit être reproduite après chaque dépose et réinstallation des vérins suite, par exemple, à une opération de maintenance sur l'inverseur. Les opérateurs de maintenance, différents des opérateurs spécialisés de l'assemblage, doivent donc également maîtriser cette procédure de calibration des vérins électriques.

Actuellement, lors de l'installation des vérins, l'opérateur se contente de monter physiquement ces vérins sans se soucier des tolérances mécaniques de la nacelle. Bien évidemment, la course des vérins est préalablement définie de manière à couvrir le pire cas. Une telle installation n'est donc pas précise et peut être largement améliorée pour adapter très précisément la course des vérins à chaque nacelle.

La présente invention a pour but de remédier aux inconvénients précédemment évoques, et consiste pour cela en un procédé d'autocalibration d'un capot mobile d'inverseur de poussée d'une nacelle de turboréacteur comprenant au moins un vérin électrique associé à au moins un organe de mesure de position, caractérisé en ce qu'il comprend les étapes visant à :
- amener l'élément mobile et le ou les vérins associés en position rétractée correspondant à une première position du capot mobile,
- mémoriser une ou plusieurs valeurs de position retournées par l'organe de mesure de positions pour le ou les vérins dans ladite position rétractée,
- amener l'élément mobile et le ou les vérins associés en position déployée correspondant à une deuxième position du capot mobile,
- mémoriser une ou plusieurs valeurs de position retournées par l'organe de mesure de positions pour le ou les vérins dans ladite position déployée.

Ainsi, en mémorisant électroniquement les positions déployée et rétractée des vérins électriques, on définit à partir des butées mécaniques réelles des butées électriques correspondantes. De cette manière, contrairement à la pratique habituelle qui consiste à adapter les butées mécaniques des vérins en fonctions des dispersions mécaniques de la nacelle, les mouvements de déploiement et de rétractation des vérins pourront s'effectuer en fonction de butées électroniques définies simplement et précisément en fonction des dispersions mécaniques réelles pour chaque nacelle et capot mobile concerné.

Par ailleurs, en définissant électroniquement ces positions, leurs valeurs peuvent être utilisées par un contrôleur dans l'application d'une stratégie de déploiement ou de rétractation pour par exemple, réduire automatiquement la vitesse des vérins avant accostage en butée.

Selon un premier mode de mise en oeuvre, le ou les vérins sont actionnés manuellement.

Selon un deuxième mode de mise en oeuvre, le ou les vérins sont actionnés électriquement.

Avantageusement, les positions rétractée et déployée des vérins sont détectées automatiquement par détection de butées mécaniques.

Selon une première variante de mise en oeuvre, la détection des butées mécaniques s'effectue par mesure de la variation de courant d'alimentation d'un moteur électrique actionnant le ou les vérins.

Selon une deuxième variante de mise en oeuvre, la détection des butées s'effectue par mesure de la vitesse de déploiement ou de rétractation des vérins.

De manière préférentielle, la vitesse de déploiement ou de rétractation est obtenue par dérivation de la valeur de position retournée par l'organe de mesure de position.

Bien évidemment, toute autre méthode de détection automatique des butées par exploitation d'un paramètre mesurable peut être utilisée.

De manière préférentielle, l'organe de mesure de position est un resolver. Bien évidemment il est possible d'utiliser tout autre dispositif de mesure de position connu de l'homme du métier, tels que des codeurs optiques, des potentiomètres, etc...

Avantageusement, les valeurs des positions rétractée et déployée mémorisées sont corrigées par application d'une marge d'erreur. En effet, la mesure de position étant effectuée lorsque le vérin arrive en butée déployée ou en butée rétractée, il sera avantageux de définir une butée électronique très légèrement avant la butée mécanique de manière à réduire voire éviter le choc de butée risquant, à terme, de fragiliser les pièces mécaniques, tout en assurant une fermeture ou un déploiement optimum. La marge d'erreur à appliquer sera facilement déterminée par l'homme du métier.

La présente invention se rapporte également à un inverseur de poussée comprenant au moins un capot mobile pouvant être déplacé sous l'action d'au moins un organe électromécanique de type vérin électrique, caractérisé en ce qu'il comprend une interface de commande et de régulation apte à mettre en oeuvre un procédé selon l'invention. Avantageusement, l'interface de commande est connectée à un boîtier de commande du turboréacteur et en ce que la procédé d'autocalibration peut être activé depuis la cabine de pilotage.

La mise en oeuvre de l'invention sera mieux comprise à l'aide de la description détaillée qui est exposée ci-dessous en regard du dessin annexé dans lequel :
La figure 1 est une vue schématique partielle en perspective d'une nacelle intégrant un inverseur de poussée à grille.
La figure 2 est une représentation schématique des capots mobiles et de leur système d'actionnement.
La figure 3 est un diagramme représentant les étapes de fonctionnement d'un procédé de commande selon l'invention pour la calibration d'un système d'actionnement d'un inverseur de poussée.

Avant de décrire en détail un mode de réalisation de l'invention, il est important de préciser que celle-ci n'est pas limitée à un type d'élément mobile en particulier. Bien qu'illustrée par un inverseur à grilles, elle pourra être mise en oeuvre avec des inverseurs de conceptions différentes, notamment à portes, ou encore être appliquée à toute sorte de capots mobiles équipant une nacelle de turboréacteur.

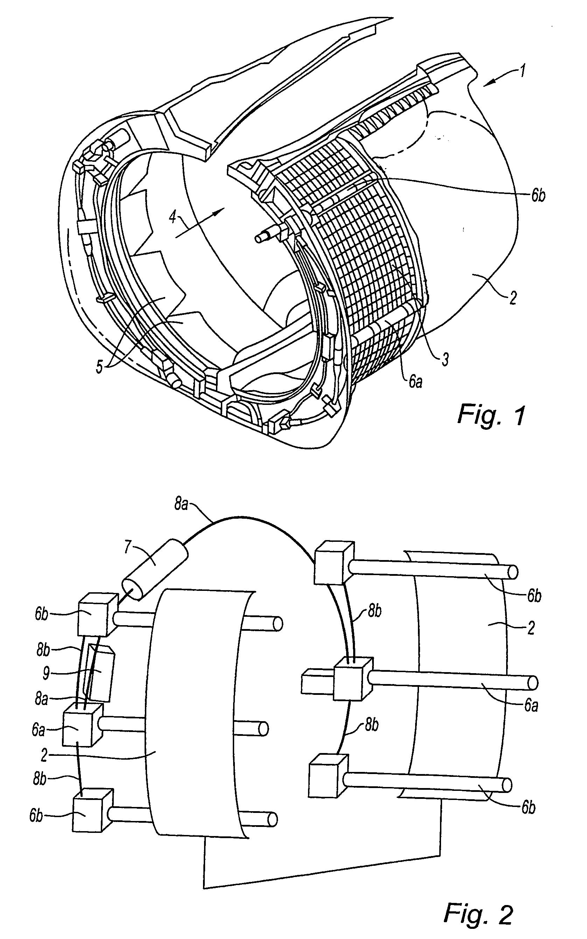

La figure 1 présente une vue schématique partielle d'une nacelle intégrant un inverseur de poussée 1. Le turboréacteur n'est pas représenté. Cet inverseur de poussée 1 possède une structure comprenant deux capots mobiles 2 semi-circulaires susceptibles de coulisser pour découvrir des grilles 3 d'aubes de déviation placées entre les capots mobiles 2 et une section de passage du flux d'air 4 à dévier. Des portes de blocage 5 sont disposées à l'intérieur de la structure de manière à pouvoir pivoter et passer d'une position dans laquelle elles ne gênent pas le passage du flux d'air 4 à une position dans laquelle elles bloquent ce passage. Afin de coordonner l'ouverture des capots mobiles 2 avec une position obturante des portes de blocage 5, celles-ci sont mécaniquement reliées au capot mobile 2 par des charnières et à la structure fixe par un système de bielles (non représentées).

Le déplacement des capots mobiles 2 le long de l'extérieur de la structure est assuré par un ensemble de vérins 6a, 6b montés sur un cadre avant à l'intérieur duquel sont logés un moteur électrique 7 et des arbres flexibles de transmission 8a, 8b respectivement connectés aux vérins 6a, 6b pour les actionner.

Le système d'actionnement des capots mobiles 2 est représenté seul à la figure 2. Chaque capot mobile 2 peut être translaté sous l'action de trois vérins 6a, 6b, comprenant un vérin central 6a et deux vérins additionnels 6b, actionnés par un unique moteur électrique 7 relié à une interface de commande 9. La puissance délivrée par le moteur électrique 7 est tout d'abord distribuée aux vérins centraux 6a par l'intermédiaire de deux arbres de transmission flexibles 8a, puis aux vérins additionnels 6b par des arbres de transmission flexibles 8b.

Par ailleurs, chaque vérins 6a, 6b est équipé d'un organe de mesure de position comprenant un « resolver » et délivrant en continu au moins une valeur permettant de déterminer la position de la tige du vérin 6a, 6b correspondant. Plus précisément, un « resolver » est un capteur de position angulaire. Ainsi, il convient d'y adjoindre un compteur de tours pour disposer d'une mesure absolue de la position de la tige du vérin 6a, 6b. L'organe de mesure de position retourne donc une valeur représentative du nombre de tours effectués par la tige d'entraînement et une valeur de mesure angulaire. Ces deux valeurs permettent de connaître précisément la longueur de déploiement de la tige du vérin 6a, 6b.

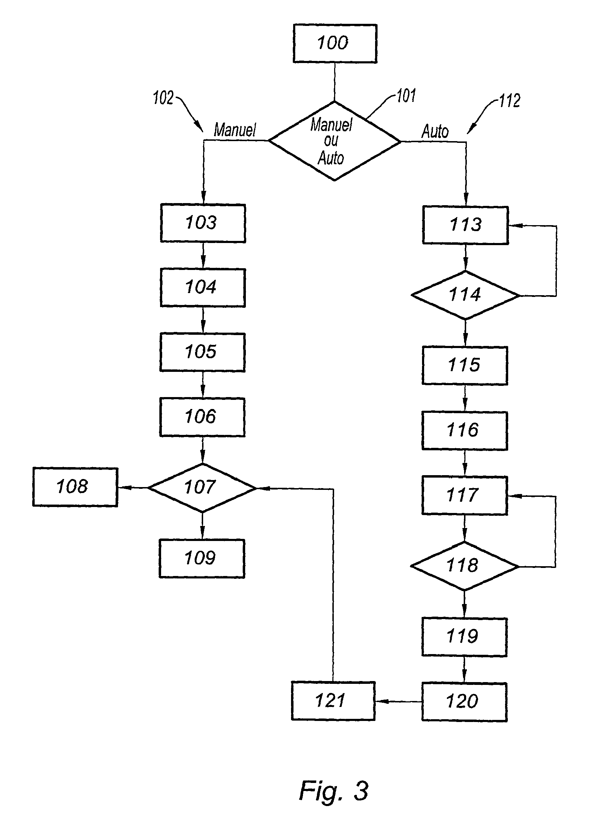

Un diagramme montrant les étapes d'un procédé selon l'invention pour la calibration des vérins est représenté à la figure 3.

Tout d'abord, la procédure de calibration est amorcée par un ordre 100 consistant à mettre les éléments électroniques sous tension, et notamment les capteurs de positions des vérins 6a, 6b. Cet ordre peut être donné depuis la cabine de pilotage de l'avion ou depuis un contrôleur électronique de la nacelle.

Cet ordre est suivi d'une étape 101 de contrôle qui vérifie si l'opérateur a choisi un mode de calibration manuel ou automatique.

Dans le cas d'une calibration manuelle 102, l'opérateur ferme manuellement l'inverseur au cours d'une étape 103. Ce faisant, il place les vérins 6a, 6b en position rétractée.

L'opérateur demande ensuite au contrôleur de mémoriser les valeurs de position des resolvers de chaque vérin 6a, 6b au cours d'une étape 104. Ces valeurs déterminent une butée électrique de rétractation.

L'opérateur amène ensuite manuellement l'inverseur en position déployée au cours d'une étape 105. Ce faisant, il place les vérins 6a, 6b en position déployée.

L'opérateur demande alors au contrôleur de mémoriser les valeurs de position des resolvers de chaque vérin 6a, 6b au cours d'une étape 106. Ces valeurs déterminent une butée électrique de déploiement.

Une fois les valeurs des positions déployées et rétractées mémorisées, le contrôleur procède à une étape 107 de vérification de la sauvegarde desdites valeurs, éventuellement de leur cohérence et retourne éventuellement un message d'erreur 108.

Les butées électriques de rétractation et de déploiement sont ensuite corrigées lors d'une étape 109 par une marge d'erreur visant à tenir compte des incertitudes de mesures des resolvers et du fait que les capots mobiles ont été amenés dans des positions de butée physiques.

Ainsi, les valeurs de positions correspondant à la butée de rétractation sont très légèrement augmentées tandis que les valeurs de positions correspondant à la butée de déploiement sont très légèrement réduites.

Dans le cas d'une calibration automatique 112, la nacelle est alimentée avec une puissance électrique suffisante pour actionner électriquement les vérins 6a, 6b et non plus seulement alimenter les organes électroniques.

Lors d'une étape 113, les vérins 6a, 6b sont alimentés de manière à être en position rétractée. Une boucle de contrôle 114 vérifie en continue si la butée mécanique de fermeture de l'inverseur est atteinte ou si il convient de continuer à rétracter les vérins 6a, 6b.

Cette détection de butée mécanique pourra être effectuée, par exemple, par surveillance de la vitesse du moteur électrique 7 par dérivation des valeurs retournées par un ou plusieurs resolvers ou par surveillance de la tension d'alimentation du moteur par le moteur.

Lorsque la butée mécanique de rétractation est atteinte, le moteur électrique 7 est stoppé par un ordre 115. Comme précédemment, le contrôleur mémorise alors les valeurs de position des résolvers de chaque vérin 6a, 6b au cours d'une étape 116.

Le moteur électrique 7 est alors inversé pour procéder au déploiement des vérins 6a, 6b lors d'une étape 117.

Une boucle de contrôle 118 vérifie en continu si la butée mécanique de déploiement de l'inverseur est atteinte ou si il convient de continuer à déployer les vérins 6a, 6b.

Lorsque la butée mécanique de déploiement est atteinte, le moteur électrique 7 est stoppé par un ordre 119. Comme précédemment, le contrôleur mémorise alors les valeurs de position des résolvers de chaque vérin 6a, 6b au cours d'une étape 120.

Le cycle peut être terminé par une étape 121 de retour de l'inverseur et des vérins 6a, 6b en position rétractée.

Une fois les valeurs des positions déployées et rétractées mémorisées, le contrôleur procède à l'étape 107 de vérification de la sauvegarde desdites valeurs.

Les butées électriques de rétractation et de déploiement sont ensuite corrigées lors de l'étape 108 par une marge d'erreur visant à tenir compte des incertitudes de mesures des resolvers et du fait que les capots mobiles ont été amenés dans des positions de butée physiques.

Bien que l'invention ait été décrite en liaison avec des exemples particuliers de réalisation, il est bien évident qu'elle n'y est nullement limitée et qu'elle comprend tous les équivalents techniques des moyens décrits ainsi que leurs combinaisons si celles-ci entrent dans le cadre de l'invention.

## Revendications

1. Procédé d'autocalibration d'un capot mobile (2) d'inverseur de poussée d'une nacelle (1) de turboréacteur comprenant au moins un vérin électrique (6a, 6b) associé à au moins un organe de mesure de position, **caractérisé en ce qu'**il comprend les étapes visant à :
- amener (103, 113) le capot mobile et le ou les vérins associés en position rétractée correspondant à une première position du capot mobile,
- mémoriser (104, 116) une ou plusieurs valeurs de position retournées par le ou les organes de mesure de positions dans ladite position rétractée,
- amener (105, 117) le capot mobile et le ou les vérins associés en position déployée correspondant à une deuxième position du capot mobile,
- mémoriser (106, 120) une ou plusieurs valeurs de position retournées par l'organe de mesure de positions dans ladite position déployée.

2. Procédé selon la revendication 1, **caractérisé en ce que** le ou les vérins (6a, 6b) sont actionnés (103, 105) manuellement.

3. Procédé selon la revendication 1, **caractérisé en ce que** le ou les vérins (6a, 6b) sont actionnés (113, 117) électriquement.

4. Procédé selon la revendication 3, **caractérisé en ce que** les positions rétractée et déployée des vérins (6a, 6b) sont détectées automatiquement (114, 118) par détection de butées mécaniques.

5. Procédé selon la revendication 4, **caractérisée en ce que** la détection (114, 118) des butées mécaniques s'effectue par mesure de la variation de courant d'alimentation d'un moteur (7) électrique actionnant le ou les vérins (6a, 6b).

6. Procédé selon la revendication 4, **caractérisé en ce que** la détection (114, 118) des butées s'effectue par mesure de la vitesse de déploiement ou de rétractation des vérins (6a, 6b).

7. Procédé selon la revendication 6, **caractérisé en ce que** la vitesse de déploiement ou de rétractation est obtenue par dérivation de la valeur de position retournée par l'organe de mesure de position.

8. Procédé selon l'une quelconque des revendications 1 à 7, **caractérisé en ce que** l'organe de mesure de position est un resolver.

9. Procédé selon l'une quelconque des revendications 1 à 8, **caractérisé en ce que** les valeurs des positions rétractée et déployée mémorisées sont corrigées par application (108) d'une marge d'erreur.

10. Inverseur de poussée comprenant au moins un capot mobile (2) pouvant être déplacé sous l'action d'au moins une organe électromécanique de type vérin électrique (6a, 6b), **caractérisé en ce qu'**il comprend une interface de commande (9) et de régulation apte à mettre en oeuvre un procédé selon l'une quelconque des revendications 1 à 9.

11. Inverseur selon la revendication 10, **caractérisé en ce que** l'interface de commande (9) est connectée à un boîtier de commande du turboréacteur et **en ce que** le procédé d'autocalibration peut être activée depuis la cabine de pilotage.

## Claims

1. A method of self-calibration of a moving part (2) of a turbojet engine nacelle (1) comprising at least one electric jack (6a, 6b) associated with at least one position-measuring member, **characterized in that** it comprises the steps aimed at:
- bringing (103, 113) the moving part and the associated jack or jacks into the retracted position, corresponding to a first position of the moving part,
- logging (104, 116) one or more position values returned by the position-measuring member or members in said retracted position,
- bringing (105, 117) the moving part and the associated jack or jacks into the deployed position, corresponding to a second position of the moving part,
- logging (106, 120) one or more position values returned by the position-measuring member in said deployed position.

2. The method as claimed in claim 1, **characterized in that** the jack or jacks (6a, 6b) are actuated (103, 105) manually.

3. The method as claimed in claim 1, **characterized in that** the jack or jacks (6a, 6b) are actuated (113, 117) electrically.

4. The method as claimed in claim 3, **characterized in that** the retracted and deployed positions of the jacks (6a, 6b) are detected automatically (114, 118) by detecting mechanical stops.

5. The method as claimed in claim 4, **characterized in that** the detection (114, 118) of the mechanical stops is performed by measuring the variation in current drawn by an electric motor (7) actuating the jack or jacks (6a, 6b).

6. The method as claimed in claim 4, **characterized in that** the detection (114, 118) of the stops is performed by measuring the rate at which the jacks (6a, 6b) deploy or retract.

7. The method as claimed in claim 6, **characterized in that** the rate of deployment or of retraction is obtained by differentiating the position value returned by the position-measuring member.

8. The method as claimed in any one of claims 1 to 7, **characterized in that** the position-measuring member is a resolver.

9. The method as claimed in any one of claims 1 to 8, **characterized in that** the logged retracted and deployed position values are corrected by applying (108) a margin of error.

10. A thrust reverser comprising at least one moving cowl (2) that can be moved under the action of at least one electromechanical member of the electric jack (6a, 6b) type, **characterized in that** it comprises an instrumentation and control interface (9) capable of implementing a method as claimed in any one of claims 1 to 9.

11. The reverser as claimed in claim 10, **characterized in that** the control interface (9) is connected to a turbojet engine control unit and **in that** the self-calibration method can be activated from the cockpit.

## Patentansprüche

1. Verfahren zur Selbstkalibrierung einer bewegbaren Haube (2) der Schubumkehr eines Rumpfs (1) eines Turbotriebwerks, die mindestens einen elektrischen Zylinder (6a, 6b) umfasst, der mit mindestens einem Organ zur Positionsmessung verbunden ist, **dadurch gekennzeichnet, dass** es die folgenden Schritte umfasst, die darauf abzielen:
- die bewegbare Haube und den oder die beteiligten Zylinder in eingefahrene Position zu führen (103, 113), die einer ersten Position der bewegbaren Haube entspricht,
- einen oder mehrere Positionswerte, die von dem oder den Organen zur Positionsmessung in der eingefahrenen Position zurückgemeldet werden, zu speichern (104, 116),
- die bewegbare Haube und den oder die beteiligten Zylinder in ausgefahrene Position zu führen (105, 117), die einer zweiten Stellung der bewegbaren Haube entspricht,
- einen oder mehrere Positionswerte, die von dem oder den Organen zur Positionsmessung in der ausgefahrenen Position zurückgemeldet werden, zu speichern (106, 120).

2. Verfahren nach Anspruch 1, **dadurch gekennzeichnet, dass** der oder die Zylinder (6a, 6b) manuell betätigt werden (103, 105).

3. Verfahren nach Anspruch 1, **dadurch gekennzeichnet, dass** der oder die Zylinder (6a, 6b) elektrisch betätigt werden (113, 117).

4. Verfahren nach Anspruch 3, **dadurch gekennzeichnet, dass** die eingefahrene und ausgefahrene Position der Zylinder (6a, 6b) automatisch durch Erfassung mechanischer Anschläge erfasst werden (114, 118).

5. Verfahren nach Anspruch 4, **dadurch gekennzeichnet, dass** die Erfassung (114, 118) der mechanischen Anschläge durch Messen der Schwankung des Stroms zur Versorgung eines Elektromotors (7) erfolgt, der den oder die Zylinder (6a, 6b) betätigt.

6. Verfahren nach Anspruch 4, **dadurch gekennzeichnet, dass** die Erfassung (114, 118) der Anschläge durch Messen der Geschwindigkeit des Ausfahrens oder Einfahrens der Zylinder (6a, 6b) erfolgt.

7. Verfahren nach Anspruch 6, **dadurch gekennzeichnet, dass** die Ausfahr- oder Einfahrgeschwindigkeit durch Ableitung des Positionswerts ermittelt wird, der vom Organ zur Positionsmessung zurückgemeldet wird.

8. Verfahren nach einem der Ansprüche 1 bis 7, **dadurch gekennzeichnet, dass** das Organ zur Positionsmessung ein Resolver ist.

9. Verfahren nach einem der Ansprüche 1 bis 8, **dadurch gekennzeichnet, dass** die gespeicherten Werte der eingefahrenen und ausgefahrenen Position durch Anwendung (108) eines Fehlerbereichs korrigiert werden.

10. Schubumkehr, die mindestens eine bewegbare Haube (2) umfasst, die unter Einwirkung mindestens eines elektromechanischen Organs vom Typ elektrischer Zylinder (6a, 6b) verschiebbar ist, **dadurch gekennzeichnet, dass** sie eine Schnittstelle zur Steuerung (9) und Regelung umfasst, die imstande ist, ein Verfahren nach einem der Ansprüche 1 bis 9 umzusetzen.

11. Umkehr nach Anspruch 10, **dadurch gekennzeichnet, dass** die Steuerungsschnittstelle (9) mit einem Steuergerät des Turbotriebwerks verbunden ist, und dass das Verfahren zur Selbstkalibrierung von der Pilotenkabine aus aktivierbar ist.
